Europäisches Patentamt

European Patent Office

Office européen des brevets

(11) Numéro de publication : **0 330 569 B1**

(12) **FASCICULE DE BREVET EUROPEEN**

(45) Date de publication du fascicule du brevet :
**02.12.92 Bulletin 92/49**

(51) Int. Cl.⁵ : **B01D 27/08,** B01D 35/30, B01D 35/14

(21) Numéro de dépôt : **89400497.7**

(22) Date de dépôt : **22.02.89**

(54) **Perfectionnements aux filtres vissables à capot cannelé ou analogue.**

(30) Priorité : **26.02.88 FR 8802392**

(43) Date de publication de la demande :
**30.08.89 Bulletin 89/35**

(45) Mention de la délivrance du brevet :
**02.12.92 Bulletin 92/49**

(84) Etats contractants désignés :
**DE ES GB IT NL SE**

(56) Documents cités :
**DE-B- 1 189 520**
**FR-A- 1 532 437**
**GB-A- 2 080 695**

(56) Documents cités :
**US-A- 3 224 585**
**US-A- 3 473 666**
**US-A- 3 710 930**
**US-A- 3 722 691**
**US-A- 4 454 037**

(73) Titulaire : **LABINAL**
**5 Avenue Newton**
**F-78180 Montigny le Bretonneux (FR)**

(72) Inventeur : **Pages, Jean**
**9 Rue Jules Siegfried**
**F-93800 Epinay sur Seine (FR)**

(74) Mandataire : **Behaghel, Pierre et al**
**CABINET PLASSERAUD 84 rue d'Amsterdam**
**F-75009 Paris (FR)**

**Description**

L'invention est relative aux filtres comprenant un capot cannelé ou analogue en cloche et susceptibles d'être montés par vissage d'une manière facilement amovible sur un support rigide.

Par capot "cannelé" on entend dans le présent texte et dans les revendications qui suivent un capot comportant une jupe cylindrique raccordée à un fond, généralement bombé vers l'extérieur, capot pour lequel la zone, de la jupe, adjacente au fond, est déformée de façon à présenter une couronne d'empreintes longitudinales réparties autour de ladite zone, ces empreintes pouvant être aussi bien des rainures ou encoches creusées vers l'intérieur de la jupe et composant alors des cannelures proprement dites que des méplats délimitant un prisme à section polygonale.

Elle vise plus particulièrement, mais non exclusivement, parmi les filtres ci-dessus, ceux qui sont destinés à purifier un liquide (en particulier huile ou carburant) et à équiper un moteur de véhicule alimenté par ce liquide.

Dans les modes de réalisation connus, les filtres du genre en question sont mis en place par vissage à la main, leur capot cannelé pouvant être facilement pris en main et leur démontage par dévissage est généralement effectué à l'aide d'une clé spéciale adaptée aux cannelures du capot.

Ces opérations supposent que l'emplacement de montage du filtre soit suffisamment accessible pour permettre la prise en main de sa portion cannelée et/ou la mise en place de la clé spéciale sur cette portion.

Elles impliquent également le recours à une telle clé, laquelle n'est généralement disponible que chez des mécaniciens professionnels.

Pour remédier à ces inconvénients, il a déjà été proposé de rapporter par soudure un écrou massif carré ou hexagonal sur le sommet du capot cannelé.

Cette solution permet certes d'effectuer les vissages et dévissages du capot à l'aide d'une clé tubulaire coiffant axialement ledit écrou, même si le filtre se trouve en une position peu accessible.

Mais elle présente un certain nombre d'inconvénients, et en particulier les suivants.

En premier lieu, vu l'épaisseur relativement faible de la tôle constituant le capot, la soudure de l'écrou sur cette tôle risque de créer dans celle-ci des amincissements susceptibles de provoquer des fissures lors de l'application des couples de serrage ou de desserrage sur l'écrou, et ce au détriment de l'étanchéité.

Par ailleurs, la soudure de l'écrou doit être effectuée avant la peinture du capot pour que d'une part le contact métal-métal nécessaire à la soudure soit correctement établi, et que d'autre part l'écrou puisse bénéficier lui-même de la protection assurée par la couche de peinture.

Il est donc exclu de souder un tel écrou sur des capots déjà terminés : une telle soudure exigerait au contraire une modification des chaînes de fabrication en série habituelles desdits capots, et ce au détriment de l'universalité de la fabrication puisqu' il ne serait alors plus possible d'adopter une même chaîne pour fabriquer à la fois les capots du type classique et les capots à écrou soudé.

L'invention a pour but, surtout, de remédier à ces inconvénients.

A cet effet, les filtres du genre en question selon l'invention sont caractérisés en ce qu'ils comprennent, rapportée et collée sur leur capot cannelé, une coiffe métallique connue en soi par le document FR-A-1 532 437, dont la jupe cylindrique présente au moins une empreinte propre à coopérer avec l'une des cannelures du capot et dont la portion centrale du fond comporte au moins une butée excentrée en relief ou en creux propre à coopérer facilement avec un outil d'entraînement en rotation.

Dans des modes de réalisation préférés, on a recours en outre à l'une et/ou à l'autre des dispositions suivantes :

- la coiffe est conçue de façon telle qu'après sa mise en place sur le capot, un espace soit réservé entre les fonds en regard de la coiffe et du capot, sauf à la périphérie de ces fonds, où est localisée la colle d'assemblage,
- la butée est un bossage présentant la forme d'un écrou à six pans,
- la butée est un bossage présentant la forme d'un prisme carré,
- la butée est constituée par au moins deux trous évidés dans le fond du capot,
- les empreintes prévues dans la jupe de la coiffe sont des cannelures régulièrement réparties autour de cette jupe,
- le nombre des cannelures de la coiffe est une fraction du nombre des cannelures du capot, le premier étant notamment égal à neuf si le second est égal à dix-huit.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en élévation un filtre à huile établi selon l'invention, la coiffe de ce filtre étant montrée en coupe axiale sur la moitié de droite de cette figure.

La figure 2 montre le même filtre en plan avec une portion de sa coiffe arrachée.

La figure 3 montre à plus grande échelle un détail de la figure 1, avec le capot en coupe tout comme la coiffe.

D'une façon connue en soi, le filtre à huile ici considéré est délimité extérieurement par un capot ou "cuve" métallique 1 présentant une jupe cylindrique de révolution 2 et un fond 3 légèrement bombé vers l'extérieur.

Des cannelures longitudinales 4 sont embouties dans la zone, de la jupe 2, proche du fond 3.

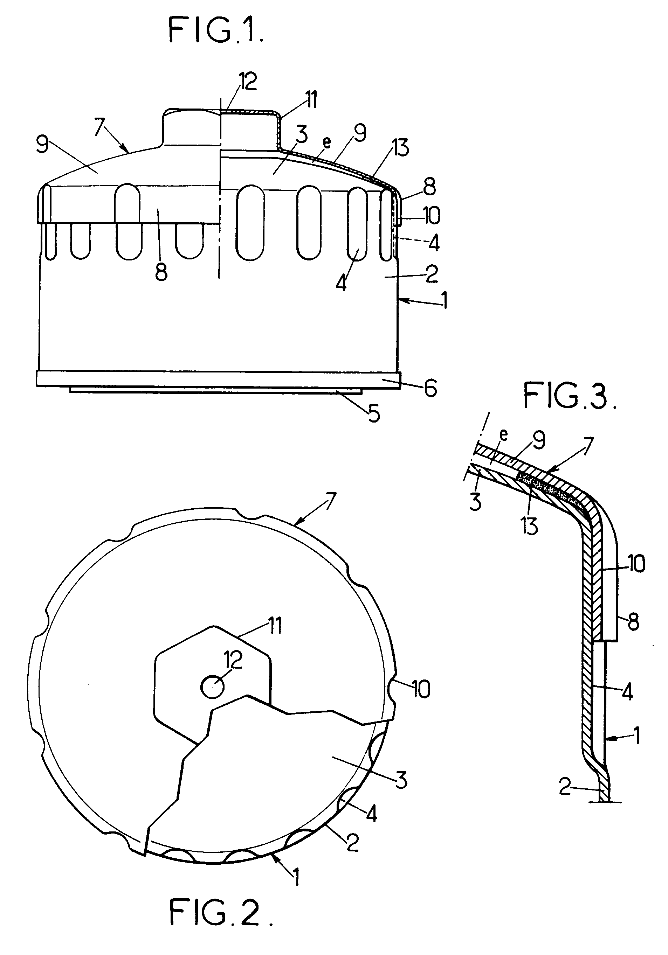

Le capot contient des organes de filtration, de guidage et d'étanchéité ainsi qu'un filetage axial, généralement interne, permettant un montage du filtre par vissage de ce filetage sur un filetage complémentaire. Ces divers organes sont extérieurs à la présente invention et ne sont donc pas décrits ici on aperçoit seulement sur la figure 1, à la base du filtre, un joint d'étanchéité 5 qui est porté par un anneau métallique 6 serti sur le bord de la jupe 2.

Sur le capot 1 est rapportée une coiffe métallique 7 présentant, comme ce capot, une jupe cylindrique de révolution 8 et un fond 9 bombé vers l'extérieur.

Cette coiffe est dimensionnée de façon telle que sa jupe 8 entoure jointivement une partie de la zone cannelée du capot et soit donc ajustée contre cette zone.

Ladite jupe 8 comprend elle-même au moins une empreinte 10 propre à être introduite dans l'une des portions creuses des cannelures 4 du capot 1 aux fins de blocage angulaire de la coiffe par rapport à ce capot.

Ces empreintes 10 sont de préférence des cannelures complémentaires des cannelures 4 du capot, réparties régulièrement autour de la coiffe.

Le nombre des cannelures 10 de la coiffe peut être identique à celui des cannelures du capot mais il peut également être inférieur, par exemple égal à la moitié, comme c'est le cas sur le dessin où les deux nombres en question sont respectivement de neuf et de dix-huit.

Au centre du fond de la coiffe est embouti un bossage creux 11 faisant saillie vers l'extérieur de cette coiffe et se prêtant facilement à la prise par un outil tel qu'une clé tubulaire, un tournevis, etc.

Dans le mode de réalisation illustré, ce bossage 11 se présente sous la forme d'un écrou à six pans.

Mais il pourrait également présenter la forme d'un prisme à section carrée ou encore celle d'une paire de butées symétriques l'une de l'autre par rapport à l'axe de la coiffe et définissant entre elles une fente ou un logement de réception pour un outil d'entraînement rotatif ce logement pourrait être par exemple de type à baïonnette pour coopérer avec deux pions radiaux complémentaires d'un tel outil, solution qui assure un accrochage axial de l'outil.

Le bossage 11 pourrait également être remplacé par au moins un trou évidé dans le fond du capot, notamment par deux trous symétriques l'un de l'autre par rapport à l'axe du capot, ou par quatre trous décalés de 90 degrés de proche en proche autour de cet axe, trous propres à coopérer avec des clés à ergots.

Le profil de la coiffe 7 est tel qu'à la fin de sa mise en place axiale sur le capot 1, seules sa jupe et la périphérie de son fond viennent en contact avec des plages en regard du capot, ce qui réserve un espace e entre les deux fonds ou dômes en regard de la coiffe et du capot.

Comme visible sur les figures 1 et 3, cet espace e s'étend sur la plus grande partie des surfaces en regard desdits fonds ou dômes.

En outre, le bossage 11 est percé en son centre d'un petit trou 12 de mise à l'air.

Après mise en place de la coiffe 7 sur le capot 1, l'assemblage mutuel définitif de ces deux pièces est assuré par collage à l'aide d'une colle souple appropriée 13.

Cette colle 13 est localisée à la périphérie des deux fonds en regard, savoir au niveau des plages annulaires, de ces fonds, qui sont pratiquement en contact mutuel.

Le choix du collage et non de la soudure pour effectuer ledit assemblage est ici possible du fait que cet assemblage peut être exécuté sans aucun souci d'assurer une étanchéité et du fait qu'il doit résister uniquement aux efforts susceptibles d'être développés pour séparer axialement la coiffe du capot, efforts qui sont tout à fait négligeables dans la pratique un collage est donc amplement suffisant pour répondre à de telles exigences.

Certes il importe que les couples de serrage et de desserrage exercés sur l'écrou ou bossage 11 en vue de monter le filtre sur son support par vissage ou de le démonter par dévissage soient correctement transmis de la coiffe 7 au capot 1.

Mais le transfert de ces couples ne fait intervenir en aucune façon le collage axial ci-dessus il est intégralement assuré par la coopération mécanique des cannelures en prise mutuelle de la coiffe et du capot.

Cela dit, le choix du collage rendu possible pour les raisons indiquées ci-dessus présente un certain nombre d'avantages, et en particulier les suivants.

Il est possible d'assembler la coiffe sur un capot déjà terminé et peint et de faire appel pour cet assemblage à une coiffe elle-même déjà terminée et peinte.

On peut donc utiliser une chaîne de fabrication unique pour les capots classiques et pour ceux équipés d'une coiffe selon l'invention : il suffit à cet effet, pour réaliser des capots perfectionnés selon l'invention, de prélever certains des capots normalement fabriqués à la sortie de leur chaîne de fabrication et de coller sur ceux-ci les coiffes ci-dessus décrites.

Il est à noter également que l'adjonction au capot de l'écrou ou autre bossage permettant une prise facile est ici obtenue sans aucun affaiblissement local de la tôle constitutive du capot ni aucun risque de fissuration de cette tôle : on peut dire au contraire que la présence de la coiffe renforce la résistance mécanique et la protection du capot.

On notera par ailleurs l'intérêt que présente l'espace e réservé entre les fonds en regard de la coiffe et du capot : en effet, au cours du fonctionnement du moteur équipé par le filtre ici considéré, la zone centrale du fond du capot est soumise à des vibrations dues à la circulation interne du liquide à filtrer et l'espace e forme un tampon efficace pour éviter la transmission de ces vibrations à la coiffe.

Pour monter et démonter un filtre du genre décrit ci-dessus, il suffit d'exercer sur son écrou ou bossage 11 un couple de vissage ou de dévissage à l'aide d'un outil approprié tel qu'une clé à tube, ce qui est une manoeuvre facile même lorsque le filtre se trouve en une position peu accessible : c'est ainsi que l'on sait monter et démonter facilement des bougies d'allumage qui se trouvent au fond de puits relativement profonds.

En suite de quoi, et quel que soit le mode de réalisation adopté, on dispose finalement d'un filtre à capot coiffé dont la constitution, la mise en oeuvre et les avantages résultent suffisamment de ce qui précède.

## Revendications

1. Filtre comprenant un capot cannelé (1) ou analogue en cloche et susceptible d'être monté par vissage d'une manière facilement amovible sur un support rigide, caractérisé en ce qu il comprend, rapportée et collée sur son capot cannelé (1), une coiffe métallique (7) dont la jupe cylindrique (8) présente au moins une empreinte (10) propre à coopérer avec l'une des cannelures (4) du capot et dont la portion centrale du fond (9) comporte au moins une butée excentrée en relief ou en creux propre à coopérer facilement avec un outil d'entraînement en rotation.

2. Filtre selon la revendication 1, caractérisé en ce que la coiffe (7) est conçue de façon telle qu'après sa mise en place sur le capot (1), un espace (e) soit réservé entre les fonds (3,9) en regard de la coiffe (7) et du capot (1), sauf à la périphérie de ces fonds, où est localisée la colle d'assemblage (13).

3. Filtre selon l'une quelconque des revendications 1 et 2, caractérisé en ce que la butée est un bossage (11) présentant la forme d'un écrou à six pans.

4. Filtre selon l'une quelconque des revendications 1 et 2, caractérisé en ce que la butée est un bossage présentant la forme d'un prisme carré.

5. Filtre selon l'une quelconque des revendications 1 et 2, caractérisé en ce que la butée présente la forme de deux bossages symétriques l'un de l'autre par rapport à l'axe de la coiffe et définissant entre eux un logement pour un outil.

6. Filtre selon l'une quelconque des revendications 1 et 2, caractérisé en ce que la butée est constituée par au moins deux trous évidés dans le fond (9) du capot (1).

7. Filtre selon l'une quelconque des précédentes revendications, caractérisé en ce que les empreintes (10) prévues dans la jupe (8) de la coiffe sont des cannelures (4) régulièrement réparties autour de cette jupe.

8. Filtre selon l'une quelconque des précédentes revendications, caractérisé en ce que le nombre des cannelures (10) de la coiffe (7) est une fraction du nombre des cannelures (4) du capot (1).

9. Filtre selon la revendication 8, caractérisé en ce que le nombre des cannelures (10) de la coiffe (7) est égal à neuf et en ce que le nombre des cannelures (4) du capot (1) est égal à dix-huit.

## Patentansprüche

1. Filter, umfassend ein kanneliertes oder analoges Gehäuse (1) in der Form einer Glocke, welches dazu geeignet ist, durch leicht lösbare Verschraubung auf einem starren Träger angebracht zu werden, **dadurch gekennzeichnet,** daß es einen auf seinem kannelierten Gehäuse (1) aufgesetzten und angeklebten, metallischen Deckel (7) umfaßt, dessen zylindrischer Mantel (8) wenigstens eine Einbauchung (10) aufweist, welche geeignet ist, mit einer der Kehlungen (4) des Gehäuses zusammenzuwirken und dessen zentraler Abschnitt der Deckfläche (9) wenigstens einen erhabenen oder vertieften, aus dem Zentrum gebrachten Anschlag aufweist, der dazu geeignet ist, einfach mit einem Drehmitnahmewerkzeug zusammenzuwirken.

2. Filter nach Anspruch 1, dadurch gekennzeichnet, daß der Deckel (7) derart ausgelegt ist, daß nach seinem Anbringen auf dem Gehäuse (1) ein Raum (e) zwischen den Deckflächen (3,9) des Deckels (7) und des Gehäuses (1) verbleibt, abgesehen vom Rand der Deckfläche, an welchem der Verbindungskleber (13) vorgesehen ist.

3. Filter nach einem der Ansprüche 1 und 2, dadurch gekennzeichnet, daß der Anschlag ein Vorsprung (11) ist, welcher die Form einer Sechskantmutter aufweist.

4. Filter nach einem der Ansprüche 1 und 2, dadurch gekennzeichnet, daß der Anschlag ein Vorsprung ist, welcher die Form eines viereckigen Prismas aufweist.

5. Filter nach einem der Ansprüche 1 und 2, dadurch gekennzeichnet, daß der Anschlag die Form zweier relativ zur Gehäuseachse symmetrischer Vorsprünge aufweist, welche zwischen sich eine Aufnahme für ein Werkzeug festlegen.

6. Filter nach einem der Ansprüche 1 und 2, dadurch gekennzeichnet, daß der Anschlag wenigstens zwei in der Deckfläche (9) des Gehäuses (1) ausgebildete Löcher aufweist.

7. Filter nach einem der vorhergehenden Ansprüche, dadurch gekennzeichnet, daß die im Mantel (8) des Deckels vorgesehenen Einbauchungen (10) regelmäßig um diesen Mantel verteilte Kehlungen (4) sind.

8. Filter nach einem der vorhergehenden Ansprüche, dadurch gekennzeichnet, daß die Anzahl der Kehlungen (10) des Deckels (7) ein Bruchteil der Anzahl der Kehlungen (4) des Gehäuses (1) ist.

9. Filter nach Anspruch 8, dadurch gekennzeichnet, daß die Anzahl der Kehlungen (10) des Deckels (7) gleich neun ist, und daß die Anzahl der Kehlungen (4) des Gehäuses (1) gleich achtzehn ist.

**Claims**

1. Filter comprising a fluted bell-shaped cover (1) or similar capable of being mounted by screwing, so as to be easily removable, onto a rigid support, characterised in that it comprises, attached and bonded onto its fluted cover (1), a metal cap (7) whose cylindrical skirt (8) has at least one impression (10) suitable for interacting with one of the flutes (4) on the cover and whose central part of the base (9) has at least one off-centre stop standing proud or recessed, suitable for interacting easily with a tool for rotating.

2. Filter according to Claim 1, characterised in that the cap (7) is designed so that, after it is placed on the cover (1), a space (e) is left between the facing bases (3, 9) of the cap (7) and cover (1), except at the periphery of these bases, where the adhesive (13) for assembling is located.

3. Filter according to either one of Claims 1 or 2, characterised in that the stop is a boss (11) having the shape of a nut with six flats.

4. Filter according to either one of Claims 1 or 2, characterised in that the stop is a boss having the shape of a square prism.

5. Filter according to either one of Claims 1 or 2, characterised in that the stop is in the form of two bosses both symmetrical with respect to the axis of the cap and defining between them a housing for a tool.

6. Filter according to either one of Claims 1 or 2, characterised in that the stop is formed by at least two holes made in the base (9) of the cover (1).

7. Filter according to any one of the preceding claims, characterised in that the impressions (10) provided in the skirt (8) on the cap are flutes (4) evenly distributed around this skirt.

8. Filter according to any one of the preceding claims, characterised in that the number of flutes (10) on the cap (7) is a fraction of the number of flutes (4) on the cover (1).

9. Filter according to Claim 8, characterised in that the number of flutes (10) on the cap (7) is equal to nine and in that the number of flutes (4) on the cover (1) is equal to eighteen.

## FIG.1.

## FIG.3.

## FIG.2.